# EUROPÄISCHE PATENTSCHRIFT

(11) **EP 1 074 603 B1**
(45) Veröffentlichungstag und Bekanntmachung des Hinweises auf die Patenterteilung: **04.04.2018**
(21) Anmeldenummer: 00115377.4
(22) Anmeldetag: 15.07.2000
(51) Int. Cl.: C09K 11/08, C01B 13/20

(54) **Verfahren und Vorrichtung zur Herstellung von oxidischen Nanokristallen**
Method and apparatus for producing oxide-nanocrystals
Procédé et dispositif de production de nanocristaux d'oxyde

(30) Priorität: 05.08.1999 DE 19936868
(43) Veröffentlichungstag der Anmeldung: 07.02.2001
(73) Patentinhaber: LEDVANCE GmbH, 85748 Garching (DE)
(72) Erfinder: Konrad, Armin, 86830 Schwabmünchen (DE); Fries, Torsten, Dr., 86391 Stadtbergen (DE); Gahn, Alfred-Georg, Dr., 13599 Berlin (DE); Kummer, Franz, Dr., 80797 München (DE)
(74) Vertreter: Nordmeyer, Philipp Werner

(56) Entgegenhaltungen:
- US-A- 5 851 507
- HAHN: "Gas phase synthesis of nanocrystalline materials" NANOSTRUCT. MATER., Bd. 9, 1997, Seiten 3-12, XP002163273
- SCHLEICH ET AL.: "Formation of nanoparticles by vapor phase reactions of titanium tetraisopropoxide in oxygen/ozone containing atmospheres" NANOSTRUCTURED MATERIALS, Bd. 8, Nr. 5, 1997, Seiten 579-586, XP002163274
- CHAN ET AL: "Effects of calcination on the microstructures and photocatalytic properties of nanosized titanium dioxide powders prepared by vapor hydrolysis." J. AM. CERAM. SOC., Bd. 82, Nr. 3, 1999, Seiten 566-572, XP002163275
- TISSUE: "Synthesis and luminescence of lanthanide ions in nanoscale insulating hosts" CHEM. MATER., Bd. 10, 1998, Seiten 2837-2845, XP000782392
- KOTTAISAMY M ET AL: "Yttrium oxide:Eu/sup 3+/ red phosphor by self-propagating high temperature synthesis" MATERIALS RESEARCH BULLETIN, AUG. 1996, ELSEVIER, USA, Bd. 31, Nr. 8, Seiten 1013-1020, XP002163276 ISSN: 0025-5408
- DATABASE JCPDS [Online] POWDER DIFFRACTION FILES, 1989 MARTIN ET AL.: "41-1105" XP002163277

## Beschreibung

Die vorliegende Erfindung betrifft ein Verfahren und eine Vorrichtung zur Herstellung von oxidischen Nanokristallen.

Oxidische Nanokristalle, insbesondere dotierte oxidische Nanokristalle, wie zum Beispiel mit Europium aktiviertes Yttriumoxid (Y2O3:Eu) haben in den letzten Jahren bei der Verwendung als Leuchtstoffe für Beleuchtungsvorrichtungen zunehmend Beachtung gefunden (US-A 5 455 489). Aus diesem Grund wurden verschiedenartigste oxidische Nanokristalle auf ihre Fähigkeit, als Leuchtstoff Verwendung zu finden, untersucht. Demgemäß wurden auch entsprechende Verfahren und Vorrichtungen zur Herstellung derartiger Nanokristalle vorgestellt.

So sind zum Beispiel für die Herstellung von Y2O3:Eu Gaskondensationstechniken bekannt, siehe beispielsweise D. K. Williams et al., J. Phys. Chem. B 102 (1998), S. 916. Weitere Diskussionen finden sich in Hahn: "Gas phase sysnthesis of nanocrystalline materials", Nanostruct. Mater. Bd. 9, 1997, S. 3-12. Dort wird ein Verfahren und eine Vorrichtung zur Herstellung oxidischer Nanokristalle beschrieben. Schleich et al: "Formation of nanoparticles by vapor phase reactions of titanium tetraisopropoxid in oxygen/ozone containing atmospheres", Nanostruct. Mater. Bd. 8, Nr. 5, 1997 S. 579 bis 586. Dort wird ebenfalls das Problem der Herstellung von oxidischen Nanokristallen diskutiert. Auch US 5 851 507 befasst sich mit der Herstellung von oxidischen Nanokristallen. Chan et al: "Effects of calcination o the microstrucutres and photocatalyitc properties of nanosized titanium dioxied poweders prepared by vapor hydrolysis", J. AM. Ceram. Soc. Bd 82., Nr. 3, 1999, 566-572. Dort wird die Herstellung ultrafeinen TiO2-Pulvers in einem Aerosol-Reaktor beschrieben. Tissue: "Synthesis and luminescence of lanthanide ions in nanoscale insulating hosts", Chem. Mater., Bd 10, 1998, S. 2837-2845. Dort wird die Herstellung von nanostrukturiertem isolierendem Material beschireben, das optisch aktive Lanthanid-Ionen enthält. Kottaisamy et al: "Yttrium oxied:Eu3+red phopshor by self-propagating high temperature synthesis", Mater. Res. Bull. Aug. 1996, Elsevier, USA, Bd. 31, Nr. 8, S. 1013-1020. Hier wird Europiumdotiertes Yttrium-Oxid beschrieben mit Kristallen, die im Durchschnitt 14 nm groß sind. Das Material kann als Leuchtstoff benutzt werden. Nachteilig an diesen bekannten Verfahren ist jedoch, dass die resultierenden oxidischen Nanokristalle stark amorph ausgebildet sind und zudem eine monokline Kristallstruktur aufweisen. Für die Verwendung der oxidischen Nanokristalle als Leuchtstoffe ist es aber gewünscht, dass diese in der kubischen Gleichgewichtsphase vorliegen, weil dann die Lichtausbeute am grössten.

Um dies zu erreichen, wurde bisher die Umwandlung der amorphen beziehungsweise monoklinen in die kubische Phase durch eine zusätzliche Temperaturbehandlung bei circa 900 DEG C vollzogen. Dies geht jedoch mit einem deutlichen Kornwachstum einher, so dass die kubische Phase erst bei Partikelgrössen über etwa 50 nm einphasig vorliegt. Dies wiederum bedeutet einerseits einen hohen Energie- und Zeitaufwand bei der Herstellung derartiger Nanokristalle. Andererseits schränkt die relativ grosse Partikelgrösse die Verwendungsmöglichkeiten dieser nach Verfahren gemäss dem Stand der Technik hergestellten oxidischen Nanokristalle stark ein. Bisher war es nicht möglich, Leuchtstoffe mit kleinen Partikelgrössen, insbesondere bis 20 nm, die eine hohe Effizienz zeigen, herzustellen. Unter Partikelgrösse wird die Korngrösse des Leuchtstoffs nach einer thermischen Behandlung, die zu einer teilweisen Agglomeration führen kann, verstanden. Die Agglomeration ist dann als gering einzustufen, wenn noch keine Versinterung der Körner an den Grenzflächen erfolgt, jedoch schon Körner aneinandergereiht sein können. Dagegen wird der Begriff Teilchengrösse verwendet, wenn die ursprüngliche Korngrösse vor einer thermischen Behandlung gemeint ist.

Es ist Aufgabe der vorliegenden Erfindung, ein Verfahren zur Herstellung oxidischer Nanokristalle bereitzustellen, das eine einfache Herstellung geeigneter kubischer Nanokristalle mit geringen Partikelgrößen ohne zusätzliche Wärmebehandlung gewährleistet.

Es ist weitere Aufgabe der vorliegenden Erfindung, eine Vorrichtung zur Herstellung von oxidischen Nanokristallen bereitzustellen, die die Nachteile des eingangs genannten Standes der Technik überwindet.

Gelöst werden diese Aufgaben durch ein Verfahren und eine Vorrichtung gemäß den Merkmalen der unabhängigen Ansprüche 1 beziehungsweise 9. Vorteilhafte Ausgestaltungen sind in den Unteransprüchen beschrieben.

Der Begriff Verdampfer (engl. Vaporizer) meint hier ein Verdampfungssystem bestehend im wesentlichen aus den Komponenten Behältnis und zugehörige Heizung.

Mit diesem erfindungsgemäßen Verfahren ist es möglich, oxidische Nanokristalle herzustellen, die in einer thermodynamischen Gleichgewichtsphase vorliegen und die eine mittlere Teilchengröße von höchstens 100 nm, bevorzugt von 1 bis 20 nm, insbesondere eine Teilchengröße im Bereich um 10 nm sowie eine kubische Kristallstruktur aufweisen. Diese können insbesondere wenig agglomeriert sein, bevorzugt mit mittlerer Partikelgröße bis 20 nm. Bereits beim Herstellungsprozeß wird die kubische Gleichgewichtsphase des Oxids erreicht. Die kubische Gleichgewichtsphase ist insbesondere wichtig für auf derartigen Oxiden basierende Leuchtstoffe mit hoher Quanteneffizienz, wie zum Beispiel Yttriumoxid (Y₂O₃), Gadoliniumoxid (Gd₂O₃) oder auch entsprechende Granate wie YAG:Ce oder (YGd)AG:Ce. Andere Anwendungen beziehen sich auf Leuchtstoffe des Typs YAM, YAP oder BAM und CAT.

Mittels geeigneter Reaktionsführung lassen sich insbesondere Leuchtstoffe mit schmaler Größenverteilung herstellen. Typisch ist eine Schwankungsbreite von 2 bis 5 nm um die mittlere Teilchengröße.

Allgemein gesprochen eignet sich das Verfahren insbesondere für oxidische oder auch oxisulfidische Nanokristalle, vor allem auf der Basis der Elemente Y, Gd, Mg, Ca, Ba und Al und anderer Seltenerdmetalle.

Die dotierten nanokristallinen Oxide finden Verwendung als Leuchtstoffe für Beleuchtungsvorrichtungen mit niedrigen oder hohen Leuchtdichten. Insbesondere ist hier an Leuchtstofflampen, Edelgas(Xe)-Excimerlampen, Displays, sowie organische und nicht-organische LEDs zu denken. Die Wirtsgitterionen sind Elemente der II. bis VI. Hauptgruppe des Periodensystems der Elemente. Bei den Dotierionen handelt es sich um Selten-Erd-Elemente wie Eu, Ce oder Tb. Für das Verfahren sind im Falle der Verwendung von metallorganischen Komplexen Verbindungen der Wirtsgitterionen (oder auch Dotierionen mit Wasserstoff-Tetramethylheptandionat) gut geeignet. Als flüchtige anorganische Verbindungen eignen sich beispielsweise Chloride.

In einer weiteren vorteilhaften Ausgestaltung des erfindungsgemäßen Verfahrens weisen der erste und der zweite Verdampfer jeweils eine Temperatur von circa 30° - 900° C auf. Die Temperatur in der Heizzone des Reaktors beträgt circa 600° - 1600° C. Des weiteren werden als Trägergase inerte Gase oder Gasgemische verwendet. Insbesondere finden hier die Edelgase oder Stickstoff oder Gemische davon Anwendung. Als Reaktionsgas hat sich Sauerstoff oder ein sauerstoffhaltiges Gemisch bewahrt.

In einer weiteren vorteilhaften Ausgestaltung des erfindungsgemäßen Verfahrens beträgt die Durchflußrate des Trägergases oder der Trägergasgemische im System 20 ml/mm. bis 50 l/min.. Die Durchflußrate des Reaktionsgases und/oder der Reaktionsgasgemische beträgt 50 ml/min. bis 100 l/min..

Erfindungsgemäß wird der Druck im Gesamtsystem bei 1 bis 1500 mbar gehalten.

Eine erfindungsgemäße Vorrichtung zur Herstellung von dotierten oxidischen Nanokristallen, nämlich mit Europium (Eu) dotiertem Yttriumoxid (Y2O3:Eu), besteht aus zwei Verdampfern, mindestens einem Reaktor mit mindestens einer Heizzone, mindestens einer Adsorptionsfalle und mindestens einer Vakuumpumpe, wobei die Verdampfer Verdampferheizungen aufweisen, die als Ölbäder ausgebildet sind. Metallorganische Komplexe eines Yttriums beziehungsweise eines Europiums, nämlich Yttrium-Tetramethylheptandionat und Eu-Tetramethylheptandionat, sind in dem ersten Verdampfer beziehungsweise in dem zweiten Verdampfer zum Überführen in die Gasphase angeordnet, wobei ein Trägergas bereitgestellt ist, um die resultierenden Gasphasen der Komplexe in den Reaktor zu überführen. Zwei Zuleitungen führen durch Öffnungen in einem Flansch in den Innenraum des Reaktors beziehungsweise der Heizzone des Reaktors, wobei eine Zuleitung das Trägergas und einen gasförmigen metallorganischen Komplex eines Wirtsgitterions und eine andere Zuleitung das Reaktionsgas und einen gasförmigen metallorganischen Komplex des Dotierions in den Reaktor einführen kann. Mit dieser Vorrichtung ist es möglich, die gewünschten oxidischen Nanokristalle zur Verwendung als Leuchtstoffe herzustellen. Eine weitere, zusätzliche Temperaturbehandlung außerhalb der Heizzone des Reaktors zur Erzielung der gewünschten kubischen Kristallform der Nanokristalle ist im Gegensatz zum Stand der Technik nicht mehr notwendig.

Die Temperatur der Ölbäder beträgt jeweils circa 140° bis 180° C. Der Reaktor ist vorteilhaft als Durchflußreaktor ausgebildet.

In einer weiteren vorteilhaften Ausgestaltung der erfindungsgemäßen Vorrichtung ist zwischen dem oder den Verdampfern und dem Reaktor jeweils eine beheizbare Röhre angeordnet. Damit wird erfindungsgemäß verhindert, daß es zu einer frühen Kondensation der in die Gasphase überführten metallorganischen Komplexe oder anorganischen Verbindungen kommt.

In einer weiteren vorteilhaften Ausgestaltung der erfindungsgemäßen Vorrichtung besteht der Reaktor aus einer Aluminiumröhre und einer zylindrisch ausgebildeten Heizzone. Am Ende der Heizzone ist innerhalb des Reaktors ein Prallblech angeordnet. Durch das derart angeordnete Prallblech wird eine Konvektion in Rückrichtung, d. h. entgegen der Einströmrichtung der Gasphase verhindert, so daß die Ausbildung der oxidischen Nanokristalle in den gewünschten Bereichen der Heizzone des Reaktors erfolgt.

In einer weiteren vorteilhaften Ausgestaltung der erfindungsgemäßen Vorrichtung ist zwischen einer der ersten Adsorptionsfalle nachgeschalteten zweiten Adsorptionsfalle und der Vakuumpumpe ein Filter angeordnet. Die zweite Adsorptionsfalle und der Filter verhindern, daß es zu einer Verunreinigung der Vakuumpumpe kommt. Üblicherweise sind die Adsorptionsfallen als Kühlfallen ausgebildet.

Weitere Einzelheiten, Merkmale und Vorteile des erfindungsgemäßen Verfahrens und der erfindungsgemäßen Vorrichtung werden im folgenden anhand eines in den Figuren dargestellten Ausführungsbeispiels gezeigt. Es zeigen:
- Figur 1: eine schematische Darstellung der erfindungsgemäßen Vorrichtung zur Herstellung von oxidischen Nanokristallen;
- Figur 2: eine schematische Darstellung eines Teilbereichs eines Reaktors der erfindungsgemäßen Vorrichtung zur Herstellung von oxidischen Nanokristallen;
- Figur 3: ein Diffraktogramm der gemäß dem erfindungsgemäßen Verfahren hergestellten oxidischen Nanokristalle;
- Figur 4: das diffuse Reflexionsspektrum von Y₂O₃ (Figur 4a) sowie das Anregungsspektrum von Eu-dotiertem Y2O3 (Figur 4b), jeweils grobkörniger Standard verglichen mit nanokristallinem Pulver.

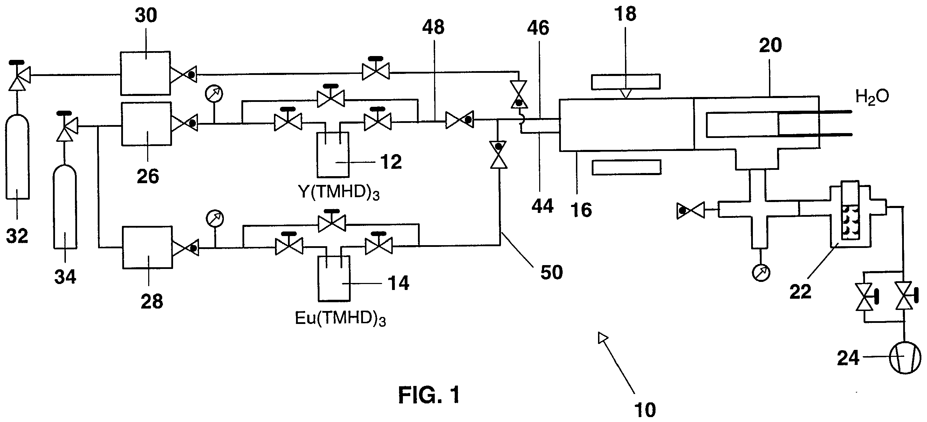

Eine in Figur 1 dargestellte Vorrichtung 10 zur Herstellung von oxidischen Nanokristallen umfaßt einen ersten und einen zweiten Verdampfer 12, 14, einen Reaktor 16 mit einer Heizzone 18, einer dem Reaktor 16 nachgeschalteten ersten Adsorptionsfalle 20 sowie einer der ersten Adsorptionsfalle 20 nachgeschalteten und damit verbundenen Vakuumpumpe 24. Zwischen der Vakuumpumpe 24 und der ersten Adsorptionsfalle 20 ist eine zweite Kühlfalle 22 angeordnet.

Die in dem Ausführungsbeispiel dargestellte Vorrichtung 10 dient zur Herstellung von dotierten oxidischen Nanokristallen, nämlich mit Europium (Eu) dotiertem Yttriumoxid (Y₂O₃:Eu). Metallorganische Komplexe des Yttriums beziehungsweise des Europiums, nämlich Yttrium-Tetramethylheptandionat und Eu-Tetramethylheptandionat (Y(TMHD)₃ beziehungsweise Eu(TMHD)₃) werden in dem ersten Verdampfer 12 beziehungsweise in dem zweiten Verdampfer 14 in die Gasphase überführt. Die resultierenden Gasphasen der Komplexe werden mit Hilfe eines Trägergases in den Reaktor 16 überführt. Als Trägergas wird in diesem Ausführungsbeispiel Argon verwendet, welches aus einer Trägergasquelle 34 in das System gespeist wird. Die Durchflußrate des Trägergases wird dabei mittels eines ersten Durchflußreglers 26 und eines zweiten Durchflußreglers 28 auf typisch 20 ml/min. - 50 l/min., vorzugsweise 150 - 250 ml/min. geregelt. Beide Verdampfer 12, 14 weisen dabei jeweils eine Temperatur von circa 30° - 900°C, vorzugsweise 140° - 180° C auf, die durch Verdampferheizungen erzeugt werden, die als Ölbäder ausgebildet sind.

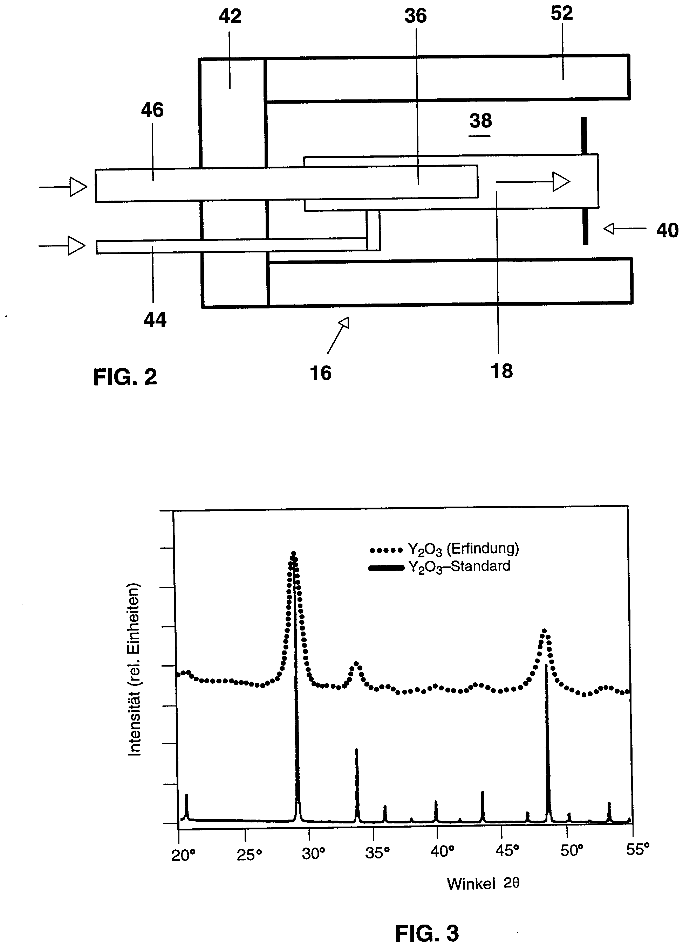

Der Reaktor 16 ist als Durchflußreaktor ausgebildet (Figur 2) und besteht aus einer Aluminiumröhre 52 und der zylindrisch ausgebildeten Heizzone 18. Am Ende der Heizzone 18 ist innerhalb des Reaktors 16 ein Prallblech 40 angeordnet (vgl. Figur 2). Das Prallblech 40 dient zur Regelung der Konvektion innerhalb des Reaktors 16 beziehungsweise innerhalb der Heizzone 18. Die Temperatur in der Heizzone 18 des Reaktors 16 beträgt circa 600° -1600°C, vorzugsweise 900° - 1100° C.

Zeitgleich mit den gasförmigen metallorganischen Komplexen wird ein Reaktionsgas oder ein Gemisch davon aus einer Reaktionsgasquelle 32 in den Reaktor 16 eingeleitet. Üblicherweise wird als Reaktionsgas Sauerstoff oder Gemische davon verwendet. Eine Zuleitung 44 führt das Reaktionsgas Sauerstoff mit einer Durchflußrate von 50 ml/min. - 100 l/min., vorzugsweise 700 - 900 ml/min., die mittels eines dritten Durchflußreglers 30 geregelt wird, in den Reaktorraum ein. In der Heizzone 18 des Reaktors 16 erfolgt bei einem Druck zwischen 1 - 1000 mbar eine Zersetzung der metallorganischen Komplexe und eine sofortige Ausbildung der oxidischen Nanokristalle, insbesondere die Ausbildung der Y₂O₃:Eu-Nanokristalle.

Dem Reaktor 16 ist eine erste Adsorptionsfalle 20 nachgeschaltet. Diese Adsorptionsfalle 20 ist als Kühlfalle ausgebildet, an der sich die resultierenden Nanokristalle abscheiden. Der ersten Adsorptionsfalle 20 ist die Vakuumpumpe 24 nachgeschaltet, die den Druck im Gesamtsystem bei circa 40 - 60 mbar hält. Auch sind Drücke zwischen 1 - 1500 mbar im Gesamtsystem denkbar. Um eine Verunreinigung der Vakuumpumpe 24 zu vermeiden, ist zwischen der ersten Adsorptionsfalle 20 und der Vakuumpumpe 24 eine zweite Adsorptionsfalle 22, die ebenfalls als Kühlfalle ausgebildet ist, und ein Filter (nicht dargestellt) dazwischengeschaltet.

Die so hergestellten dotierten oxidischen Nanokristalle, nämlich Y₂O₃:Eu-Nanokristalle, weisen eine kubische Kristallstruktur und eine Teilchengröße zwischen 1 nm und 100 nm, insbesondere 5 bis 20 nm, auf. Zudem sind sie wenig agglomeriert. Typischerweise ist Y₂O₃:Eu ein Leuchtstoff. Verwendung finden die so hergestellten oxidischen Nanokristalle als Leuchtstoffe für Beleuchtungsvorrichtungen mit niedrigen oder hohen Leuchtdichten.

Figur 2 zeigt in einer schematischen Darstellung einen Teilbereich des Reaktors 16 mit dem Prallblech 40, welches im Innenraum 38 des Reaktors 16, d. h. innerhalb des Aluminiumrohres 52, angeordnet ist. Des weiteren erkennt man, daß das Aluminiumrohr 52 mittels eines Flansches 42 einseitig geschlossen ist. Die Zuleitungen 44 und 46 führen durch Öffnungen im Flansch 42 in den Innenraum des Reaktors beziehungsweise der Heizzone 18 des Reaktors 16. In dem in Figur 2 gezeigten Ausführungsbeispiel führt eine Zuleitung 46 das Trägergas und den gasförmigen metallorganischen Komplex des Wirtsgitterions und die Zuleitung 44 das Reaktionsgas und den gasförmigen metallorganischen Komplex des Dotierions in den Reaktor 16 ein.

Figur 3 zeigt ein Diffraktogramm von nanokristallinem Y₂O₃, das gemäß dem erfindungsgemäßen Verfahren mit der erfindungsgemäßen Vorrichtung 10 hergestellt worden ist. Der pulverförmige Y₂O₃-Standard, gegen den das Diffraktogramm des hergestellten Y₂O₃ angetragen worden ist, weist eine Reinheit von 99,999% auf und hat eine Korngröße von circa 10 µm. Als Standard wird ein Pulver bezeichnet, das ausreichend grobkristallin ist, so daß dessen optische Eigenschaften mit denen eines entsprechenden Einkristalls übereinstimmen. Der Vergleich zeigt, daß die Diffraktionsmuster des erfindungsgemäß hergestellten Y₂O₃ und des Y₂O₃-Standards hervorragend übereinstimmen. Es zeigt sich, daß die erfindungsgemäß hergestellten Nanokristalle kubische Kristallstruktur (wie der Einkristall) aufweisen, ohne daß eine zusätzliche Temperaturbehandlung notwendig ist.

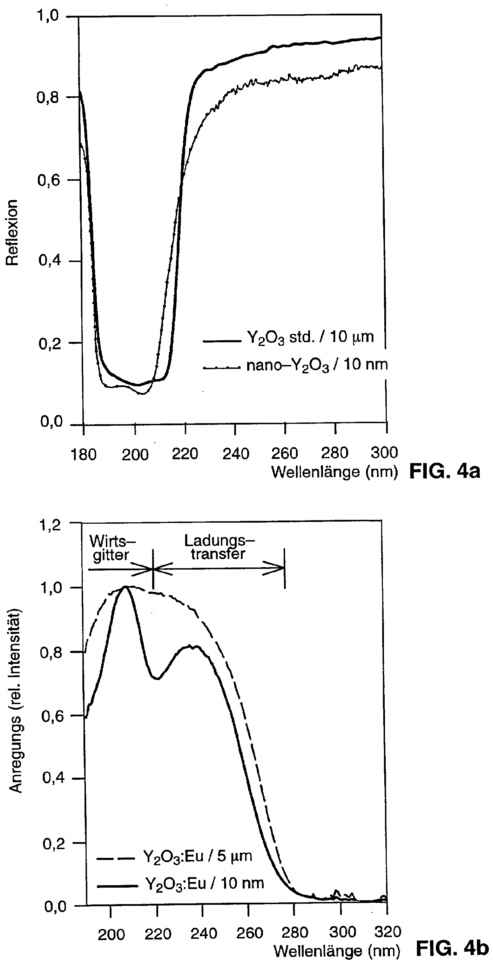

An dem erfindungsgemäß hergestellten nanokristallinen Y₂O₃ und Y₂O₃:Eu zeigt sich eine Verschiebung der -- dem Wirtsgitter zugeordneten - Absorptionskante (am langwelligen Ende gelegen) um ca. 10 nm zu kürzeren Wellenlängen (entsprechend höherer Energie) im Vergleich zum grobkristallinen Referenzmaterial. Dies hat zur Folge, daß auch das Anregungsoptimum bei höheren Anregungsenergien liegt. Die Emissionseigenschaften bleiben jedoch unverändert. Diese Eigenschaft in zweierlei Hinsicht bemerkenswert:
Zum einen bietet sich die Möglichkeit, die Absorptionskante des nanokristallinen Leuchtstoffs maßzuschneidern oder zu optimieren. Bei Y₂O₃ kann sie gemäß Figur 4a von 214 nm (Standard) zu 204 nm verschoben werden entsprechend einer Energiedifferenz von 0,2 eV (Anhebung von 5,85 auf 6,05 eV). Je kleiner die Teilchengröße desto größer die Verschiebung, insbesondere bei Teilchengrößen unter 20 nm. Figur 4a zeigt einen Vergleich zwischen Standard (mittlere Teilchengröße 10 µm) und erfindungsgemäßem Pulver (mittlere Teilchengröße 10 nm).

Zum andern bietet sich die Möglichkeit einer erweiterten Aktivierungsanwendung. Beispielsweise leuchtet Europium als Aktivator im Wirtsgitter Y₂O₃ am besten (Figur 4b). Bei Verwendung eines ausreichend nanokristallinen Pulvers kommen jedoch auch andere Seltenerdmetalle als Aktivator in Frage.

## Patentansprüche

1. Verfahren zur Herstellung von Leuchtstoffen auf der Basis von dotierten, oxidischen Nanokristallen, wobei das Verfahren folgende Schritte umfaßt:
a1) Einbringen von Wirtsgitterionen, wobei die Wirtsgitterionen Elemente der II. bis VI. Hauptgruppe des Periodensystems der Elemente sind, als metallorganische Komplexe oder flüchtige anorganische Verbindungen in mindestens einen ersten Verdampfer (12);
a2) Einbringen von Dotierionen, wobei die Dotierionen Ionen der Selten-Erd-Elemente sind, als metallorganische Komplexe oder flüchtige anorganische Verbindungen in einen zweiten Verdampfer (14);
b) jeweiliges Überführen der in Schritt a1) und a2) angesprochenen Komplexe oder Verbindungen in die Gasphase ;
c) jeweiliger Transport der resultierenden Gasphasen mit Hilfe eines oder mehrerer Trägergase und/oder Trägergasgemische in mindestens eine Heizzone (18) mindestens eines Reaktors (16) und Zuführung eines oder mehrerer Reaktionsgase und/oder Reaktionsgasgemische,
d) Zersetzung der Komplexe oder Verbindungen in der Heizzone (18) des Reaktors (16) bei einem Druck zwischen 1 - 1500 mbar und sofortige Ausbildung der oxidischen Nanokristalle, und
e) Abscheiden der oxidischen Nanokristalle an mindestens einer Adsorptionsfalle (20).

2. Verfahren nach Anspruch 1, **dadurch gekennzeichnet, daß** die Wirtsgitterionen Seltenerdmetalle, bevorzugt Y und/oder Gd, oder Mg, Ca, Ba, und Al sind.

3. Verfahren nach einem der vorhergehenden Ansprüche, **dadurch gekennzeichnet, daß** die metallorganischen Komplexe Verbindungen der Wirtsgitter- oder Dotierionen mit Wasserstoff-Tetramethylheptandionat sind.

4. Verfahren nach einem der vorhergehenden Ansprüche, **dadurch gekennzeichnet, daß** der erste und zweite Verdampfer (12, 14) eine Temperatur von ca. 30 - 900°C aufweist.

5. Verfahren nach einem der vorhergehenden Ansprüche, **dadurch gekennzeichnet, daß** die Temperatur in der Heizzone (18) des Reaktors (16) ca. 600 - 1600°C beträgt.

6. Verfahren nach einem der vorhergehenden Ansprüche, **dadurch gekennzeichnet, daß** als Trägergase inerte Gase oder Gasgemische verwendet werden.

7. Verfahren nach einem der vorhergehenden Ansprüche, **dadurch gekennzeichnet, daß** als Reaktionsgas Sauerstoff oder Gemische davon verwendet werden.

8. Verfahren nach einem der vorhergehenden Ansprüche, **dadurch gekennzeichnet, daß** die resultierenden oxidischen Nanokristalle in der thermoynamischen Gleichgewichtsphase vorliegen, wobei die resultierenden oxidischen Nanokristalle eine Teilchengröße von höchstens 100 nm, bevorzugt höchstens 20 nm, und eine kubische Kristallstruktur aufweisen.

9. Vorrichtung zur Herstellung von dotierten oxidischen Nanokristallen, nämlich mit Europium (Eu) dotiertem Yttriumoxid (Y2O3:Eu), wobei die Vorrichtung (10) zwei Verdampfer (12, 14), mindestens einen Reaktor (16) mit mindestens einer Heizzone (18), mindestens einer Adsorptionsfalle (20, 22) und mindestens einer Vakuumpumpe (24) umfasst,
**dadurch gekennzeichnet,**
**daß** die Verdampfer (12, 14) Verdampferheizungen aufweisen, die als Ölbäder ausgebildet sind, wobei Metallorganische Komplexe eines Yttriums beziehungsweise eines Europiums, nämlich Yttrium-Tetramethylheptandionat und Eu-Tetramethylheptandionat in dem ersten Verdampfer (12) beziehungsweise in dem zweiten Verdampfer (14) zum Überführen in die Gasphase angeordnet sind, wobei ein Trägergas bereitgestellt ist, um die resultierenden Gasphasen der Komplexe in den Reaktor (16) zu überführen, wobei Zuleitungen (44) und (46) durch Öffnungen in einem Flansch (42) in den Innenraum des Reaktors (16) beziehungsweise der Heizzone (18) des Reaktors (16) führen, und wobei die Zuleitung (46) das Trägergas und einen gasförmigen metallorganischen Komplex eines Wirtsgitterions und die Zuleitung (44) das Reaktionsgas und einen gasförmigen metallorganischen Komplex des Dotierions in den Reaktor (16) einführen können.

10. Vorrichtung nach Anspruch 9, **dadurch gekennzeichnet, daß** zwischen den Verdampfern (12, 14) und dem Reaktor (16) jeweils eine beheizbare Röhre (48, 50) angeordnet ist.

11. Vorrichtung nach Anspruch 9, **dadurch gekennzeichnet, daß** der Reaktor (16) aus einer Aluminiumröhre (52) und einer zylindrisch ausgebildeten Heizzone (18) besteht.

12. Vorrichtung nach Anspruch 9, **dadurch gekennzeichnet, daß** am Ende der Heizzone (18) innerhalb des Reaktors (16) ein Prallblech (40) angeordnet ist.

13. Vorrichtung nach Anspruch 9, **dadurch gekennzeichnet, daß** zwischen der der ersten Adsorptionsfalle (20) nachgeschalteten zweiten Adsorptionsfalle (22) und der Vakuumpumpe (24) ein Filter angeordnet ist.

14. Vorrichtung nach Anspruch 9, **dadurch gekennzeichnet, daß** die Adsorptionsfalle (20, 22) Kühlfallen sind.

15. Verwendung der nach dem Verfahren gemäß einem der Ansprüche 1 bis 8 hergestellten Leuchtstoffe für eine LED.

## Claims

1. Method for producing luminescent substances based on doped, oxidic nanocrystals, wherein the method comprises the following steps:
a1) introducing host lattice ions, wherein the host lattice ions are elements of the II to VI main group of the periodic table of elements, as organometallic complexes or volatile inorganic compounds, into at least a first vaporiser (12);
a2) introducing dopant ions, wherein the dopant ions are ions of the rare earth elements, as organometallic complexes or volatile inorganic compounds, into a second vaporiser (14);
b) respectively converting the complexes or compounds mentioned in step a1) and a2) into the gas phase;
c) respectively transporting the resulting gas phases by means of one or more carrier gases and/or carrier gas mixtures into at least one heating zone (18) of at least one reactor (16) and supplying one or more reaction gases and/or reaction gas mixtures,
d) decomposing the complexes or compounds in the heating zone (18) of the reactor (16) at a pressure of between 1 and 1500 mbar, with the immediate formation of the oxidic nanocrystals, and
e) separating the oxidic nanocrystals in at least one adsorption trap (20).

2. Method according to claim 1,
**characterised in that**
the host lattice ions are rare earth metals, preferably Y and/or Gd, or Mg, Ca, Ba and Al.

3. Method according to any one of the preceding claims,
**characterised in that**
the organometallic complexes are compounds of the host lattice ions or dopant ions with hydrogen-tetramethylheptanedionate.

4. Method according to any one of the preceding claims,
**characterised in that**
the first and second vaporisers (12, 14) have a temperature of approximately 30 to 900°C.

5. Method according to any one of the preceding claims,
**characterised in that**
the temperature in the heating zone (18) of the reactor (16) is approximately 600 to 1600°C.

6. Method according to any one of the preceding claims,
**characterised in that**
inert gases or gas mixtures are used as carrier gases.

7. Method according to any one of the preceding claims,
**characterised in that**
oxygen or mixtures thereof are used as the reaction gas.

8. Method according to any one of the preceding claims,
**characterised in that**
the resulting oxidic nanocrystals are present in the thermodynamic equilibrium phase, the resulting oxidic nanocrystals having a maximum particle size of 100 nm, preferably a maximum particle size of 20 nm, and having a cubic crystalline structure.

9. Apparatus for producing doped oxidic nanocrystals, namely europium (Eu)-doped yttrium oxide (Y2O3:Eu), wherein the apparatus (10) comprises two vaporisers (12, 14), at least one reactor (16) having at least one heating zone (18), at least one adsorption trap (20, 22) and at least one vacuum pump (24),
**characterised in that**
the vaporisers (12, 14) have vaporiser heating systems which are configured as oil baths, wherein organometallic complexes of yttrium and europium, namely yttrium-tetramethylheptanedionate and Eu-tetramethylheptanedionate are arranged in the first vaporiser (12) and respectively in the second vaporiser (14) for conversion into the gas phase, wherein a carrier gas is provided to transfer the resulting gas phases of the complexes into the reactor (16), wherein supply lines (44) and (46) lead through openings in a flange (42) into the interior of the reactor (16) or of the heating zone (18) of the reactor (16), and wherein the supply line (46) can introduce the carrier gas and a gaseous organometallic complex of a host lattice ion, and the supply line (44) can introduce the reaction gas and a gaseous organometallic complex of the dopant ion into the reactor (16).

10. Apparatus according to claim 9,
**characterised in that**
a respective heatable tube (48, 50) is arranged between the vaporisers (12, 14) and the reactor (16).

11. Apparatus according to claim 9,
**characterised in that**
the reactor (16) consists of an aluminium tube (52) and of a cylindrically configured heating zone (18).

12. Apparatus according to claim 9,
**characterised in that**
a baffle plate (40) is arranged inside the reactor (16) at the end of the heating zone (18).

13. Apparatus according to claim 9,
**characterised in that**
a filter is arranged between the second adsorption trap (22), connected downstream of the first adsorption trap (20), and the vacuum pump (24).

14. Apparatus according to claim 9,
**characterised in that**
the adsorption traps (20, 22) are cold traps.

15. Use of the luminescent substances, produced by the method according to any one of claims 1 to 8, for an LED.

## Revendications

1. Procédé de fabrication de luminophores sur la base de nanocristaux oxydés dopés, dans lequel le procédé comprend les étapes suivantes, consistant à :
a1) introduire des ions de réseau hôte, dans lequel les ions de réseau hôte sont des éléments des groupes principaux II à VI du tableau périodique des éléments sous la forme de complexes organométalliques ou de composés inorganiques volatils dans au moins un premier évaporateur (12) ;
a2) introduire des ions de dopage, dans lequel les ions de dopage sont des ions d'éléments de terres rares sous la forme de complexes organométalliques ou de composés inorganiques volatils dans un second évaporateur (14) ;
b) transférer respectivement les complexes ou les composés indiqués aux étapes a1) et a2) en phase gazeuse ;
c) transporter respectivement les phases gazeuses obtenues à l'aide d'un ou plusieurs gaz porteurs et/ou mélanges de gaz porteurs dans au moins une zone de chauffage (18) d'au moins un réacteur (16) et y acheminer un ou plusieurs gaz réactionnels et/ou mélanges de gaz réactionnels,
d) décomposer les complexes ou les composés dans la zone de chauffage (18) du réacteur (16) sous une pression comprise entre 1 et 1500 mbars et former immédiatement les nanocristaux oxydés et
e) séparer les nanocristaux oxydés dans au moins un piège d'adsorption (20).

2. Procédé selon la revendication 1, **caractérisé en ce que** les ions de réseau hôte sont des métaux de terres rares, de préférence Y et/ou Gd ou Mg, Ca, Ba et Al.

3. Procédé selon l'une quelconque des revendications précédentes, **caractérisé en ce que** les complexes organométalliques sont des composés des ions de réseau hôte ou de dopage avec de l'hydrogénoheptandionate de tétraméthyle.

4. Procédé selon l'une quelconque des revendications précédentes, **caractérisé en ce que** le premier et le second évaporateur (12, 14) présentent une température d'environ 30 à 900 °C.

5. Procédé selon l'une quelconque des revendications précédentes, **caractérisé en ce que** la température dans la zone de chauffage (18) du réacteur (16) atteint environ 600 à 1600°C.

6. Procédé selon l'une quelconque des revendications précédentes, **caractérisé en ce que** l'on utilise comme gaz porteurs des gaz ou des mélanges de gaz inertes.

7. Procédé selon l'une quelconque des revendications précédentes, **caractérisé en ce que** l'on utilise comme gaz réactionnels de l'oxygène ou des mélanges de celui-ci.

8. Procédé selon l'une quelconque des revendications précédentes, **caractérisé en ce que** les nanocristaux oxydés obtenus sont présents dans la phase d'équilibre thermodynamique, dans lequel les nanocristaux oxydés obtenus ont une granulométrie particulaire au maximum de 100 nm, de préférence au maximum de 20 nm, et une structure cristalline cubique.

9. Dispositif de fabrication de nanocristaux oxydés dopés, à savoir de l'oxyde d'yttrium dopé à l'europium (Eu) (Y2O3:Eu), dans lequel le dispositif (10) comprend deux évaporateurs (12, 14), au moins un réacteur (16) avec au moins une zone de chauffage (18), au moins un piège d'adsorption (20, 22) et au moins une pompe à vide (24),
**caractérisé en ce que** :
les évaporateurs (12, 14) présentent des chauffages d'évaporateurs qui se présentent sous la forme de bains d'huile, dans lequel sont agencés des complexes organométalliques d'un yttrium ou d'un europium, à savoir du tétraméthylheptandionate d'yttrium et du tétraméthylheptanedionate d'Eu dans le premier évaporateur (12) ou dans le second évaporateur (14) pour leur transfert en phase gazeuse, dans lequel on produit un gaz porteur pour transférer les phases gazeuses obtenue des complexes dans le réacteur (16), dans lequel des canalisations (44) et (46) mènent à travers des ouvertures dans une bride (42) de l'espace interne du réacteur (16) ou de la zone de chauffage (18) du réacteur (16) et dans lequel la canalisation (46) peut introduire dans le réacteur (16) le gaz porteur et un complexe organométallique gazeux d'un ion de réseau hôte et la canalisation (44) le gaz réactionnel et un complexe organométallique gazeux de l'ion de dopage.

10. Dispositif selon la revendication 9, **caractérisé en ce qu'**est agencé respectivement un tuyau chauffable (48, 50) entre les évaporateurs (12, 14) et le réacteur (16).

11. Dispositif selon la revendication 9, **caractérisé en ce que** le réacteur (16) est constitué d'un tube d'aluminium (52) et d'une zone de chauffage (18) de forme cylindrique.

12. Dispositif selon la revendication 9, **caractérisé en ce qu'**est agencée une tôle de chicane (40) à une extrémité de la zone de chauffage (18) à l'intérieur du réacteur (16).

13. Dispositif selon la revendication 9, **caractérisé en ce qu'**un filtre est agencé entre le second piège d'adsorption (22) disposé en aval du premier piège à adsorption (20) et la pompe à vide (24).

14. Dispositif selon la revendication 9, **caractérisé en ce que** les pièges à adsorption (20, 22) sont des pièges de refroidissement.

15. Utilisation des luminophores fabriqués selon le procédé de l'une quelconque des revendications 1 à 8 pour fabriquer une DEL.
